Europäisches Patentamt

European Patent Office

Office européen des brevets

(19)

(11) Veröffentlichungsnummer: **0 239 593**
**B1**

(12) **EUROPÄISCHE PATENTSCHRIFT**

(45) Veröffentlichungstag der Patentschrift: **11.04.90**

(51) Int. Cl.⁵: **F 16 B 12/20**

(21) Anmeldenummer: **86905723.2**

(22) Anmeldetag: **24.09.86**

(86) Internationale Anmeldenummer:
**PCT/DE86/00390**

(87) Internationale Veröffentlichungsnummer:
**WO 87/02102 09.04.87 Gazette 87/08**

(54) **MÖBELBESCHLAG.**

(30) Priorität: **05.10.85 DE g0852839**

(43) Veröffentlichungstag der Anmeldung:
**07.10.87 Patentblatt 87/41**

(45) Bekanntmachung des Hinweises auf die
Patenterteilung:
**11.04.90 Patentblatt 90/15**

(84) Benannte Vertragsstaaten:
**FR GB IT SE**

(56) Entgegenhaltungen:
**EP-A-0 015 883**
**DE-U-1 676 473**
**DE-U-1 842 046**
**FR-A-1 467 282**
**GB-A- 794 608**
**GB-A-2 074 283**

(73) Patentinhaber: **PAUL HETTICH GMBH & CO.**
**Vahrenkampstrasse 12-16**
**D-4983 Kirchlengern 1 (DE)**

(72) Erfinder: **HETTICH, Anton**
**Schöne Aussicht 13**
**D-4900 Herford (DE)**

(74) Vertreter: **Stracke, Alexander, Dipl.-Ing.**
**Patentanwälte Dipl.-Ing. Loesenbeck Dipl.-Ing.**
**Stracke Jöllenbecker Strasse 164 Postfach 5605**
**D-4800 Bielefeld 1 (DE)**

Courier Press, Leamington Spa, England.

**Beschreibung**

Die vorliegende Erfindung betrifft einen Möbelbeschlag nach dem Oberbegriff des Patentanspruches 1.

Aus dem DE-U-16 76 473 ist ein vergleichbarer Möbelbeschlag bekannt, bei dem die Innenspannkurve mit einer Verdrehsicherung ausgestattet ist. Aus dem DE-U-18 42 046 geht ein ähnlicher Möbelbeschlag hervor, bei dem zur Erzielung einer Verdrehsicherung die Außenfläche des Drehriegels mit einer entsprechenden Verzahnung versehen ist.

Diese beiden Literaturstellen machen deutlich, daß bereits seit langem nach Lösungen gesucht wird, die bewirken sollen, daß bei Verwendung entsprechender Möbelbeschläge ein unbeabsichtigtes Lösen in Folge von Erschütterungen, wie sie beispielsweise beim Transport eines Möbels oder bei anderen Belastungen entstehen können, verhindert oder erschwert wird.

Es hat sich allerdings in der Praxis gezeigt, daß die bislang vorgeschlagenen Lösungen noch nicht ausreichend sind.

So ist beispielsweise bei dem Möbelschlag nach dem DE-GM 18 42 046 zwar von Sägezähnen an der Umfangsfläche des Drehriegels die Rede, allerdings stehen diese erkennbar nicht über die Umfangsfläche des Drehriegels hinaus vor, d.h., die dort gezeigten Sägezähne sind nicht erhaben.

Der vorliegenden Erfindung liegt die Aufgabe zugrunde, die vorstehenden Nachteile zu vermeiden und einen Möbelbeschlag der gattungsgemäßen Art so zu verbessern, daß die Gefahr des unbeabsichtigten Lösens, insbesondere auf dem Transportwege, verringert bzw. vermieden wird.

Diese Aufgabe wird erfindungsgemäß gelöst durch die Merkmale des kennzeichnenden Teiles des Patentanspruches 1.

Durch diese Maßnahmen wird bewirkt, daß der Verriegelungskopf des Spannteiles in jedem Falle eine Zweipunktauflage findet und somit eine Verdrehung des Drehriegels gegenüber dem Verriegelungskopf nur bei Aufbringung beträchtlicher Drehmomente möglich ist.

Durch die einfache und kostengünstige Maßnahme kann das Lösedrehmoment bei dem gattungsgemäßen Möbelbeschlag so gesteigert werden, daß ein unbeabsichtigtes Lösen wesentlich erschwert oder verhindert wird.

Versuche mit gattungsgemäßen Beschlägen in handelsüblichen Spanplatten mittlerer Qualität haben beispielsweise bei einem einheitlichen Anzugsdrehmoment des Drehriegels von 3 Nm folgendes ergeben.

(Unter Anzugsdrehmoment ist hierbei das Drehmoment zu verstehen, das zum Herstellen einer ordnungsgemäßen Verbindung der Beschlagteile aufgebracht werden muß.)

1. Sind weder Innenspannkurven noch Drehriegel mit verzahnungsähnlichen Erhöhungen/Vertiefungen versehen, liegt das Lösedrehmoment des Drehriegels zwischen 1,0 und 1,4 Nm (unter Lösedrehmoment ist hierbei das zum Lösen der Beschlagverbindung erforderliche Drehmoment zu verstehen).

2. Ist nun der Drehriegel mit verzahnungsähnlichen Erhöhungen/Vertiefungen versehen, liegt das Lösedrehmoment des Drehriegels zwischen 1,8 und 2,3 Nm.

3. Ist nur die Innenspannkurve mit verzahnungsähnlichen Erhöhungen/Vertiefungen versehen, liegt das Lösedrehmoment zwischen 1,8 und 2,4 Nm.

4. Werden Innenspannkurve und Umfangsfläche des Drehriegels mit verzahnungsähnlichen Erhöhungen/Vertiefungen versehen, liegt das Lösedrehmoment des Drehriegels zwischen 2,4 und 2,6 Nm.

Wie diese Aufstellung zeigt, kann durch die Kombination verzahnungsähnlicher Erhöhungen/Vertiefungen sowohl auf der Innenspannkurve als auch auf der Umfangsfläche des Drehriegels das Lösedrehmoment bis nahe an den Wert des Anzugsdrehmomentes herangeführt werden.

Besonders vorteilhaft hierbei ist, daß die auf der Umfangsfläche des Drehriegels angebrachten Rippen bzw. Erhöhungen als Sägeverzahnung ausgebildet sind. Durch die Gestaltung der Erhöhungen der Innenspannkurve als aneinandergereihte, annähernd radienförmige Wellenberge und durch die Gestaltung der Vertiefungen der Innenspannkurve als aneinandergereihte, annähernd radienförmige Wellentäler kann der Verriegelungskopf beim Spannvorgang relativ leicht über die Wellenberg gleiten, schafft in der Endstellung aber den beabsichtigten Rasteffekt, der das unerwünschte, selbsttätige Lösen des Beschlages verhindert. Außerdem ist auch das Lösen des Beschlages im Rahmen einer Demontage eines Möbels möglich.

Um bestimmte, z.B. von Kunden gestellte Forderungen in Bezug auf die Größe der Anzugs- oder Lösedrehmomente zu erfüllen, kann die Form der Erhebungen/Vertiefungen auf der Innenspannkurve oder die Gestaltung und Anordnung der Rippen bzw. Erhöhungen auf der Umfangsfläche des Drehriegels variiert werden.

Dies gilt insgesamt für die Gestaltung sowohl der Erhöhungen/Vertiefungen der Innenspannkurve wie auch für die Gestaltung der Rippen bzw. Erhöhungen der Umfangsfläche. Diese Rippen bzw. Erhöhungen können in Form von Sägezähnen mit geraden, konkaven oder konvexen Flanken ausgebildet sein. Sie können auch durch radienförmige Ausnehmungen gebildet werden oder aus einzelnen warzenförmigen, ggfs. geneigten Erhebungen bestehen.

Diese Verzahnung kann ferner parallel zur Drehriegelachse verlaufen oder zu dieser geneigt sein, etwa vergleichbar mit einer Schräg- oder Pfeilverzahnung. Eine Schrägverzahnung könnte etwa den u.U. erwünschten Effekt bewirken, daß der Drehriegel in die ihn aufnehmende Ausnehmung des Möbelstückes hineingezogen wird.

Auch kann die Höhe der Rippen bzw. Erhebungen unterschiedlich hoch gewählt werden, etwa in der Form, daß die beim Spannen der Beschlagteile zuerst wirksamen Rippen bzw.

Erhebungen eine geringere Höhe haben als die zuletzt wirksamen, um ggfs. die zum Anzug notwendigen Kräfte allmählich zu steigern.

Ferner ist es möglich, die Höhe der Rippen bzw. Erhebungen im Bereich der Stirnseiten des Drehriegels geringer zu halten als im Mittelbereich, um den Oberflächenbereich des Möbelteiles von unerwünschten Verformungen freizuhalten.

Zweckmäßig kann es sein, die Rippen bzw. Erhebungen auf der Umfangsfläche des Drehriegels nicht unmittelbar bis an die Stirnfläche gehen zu lassen, sondern schon vorher enden zu lassen, so daß ein rippen- bzw. erhebungsfreier umlaufender Rand entsteht.

Dieser umlaufende Rand fängt einerseits einen Teil der auftretenden Kräfte ab und sorgt andererseits dafür, daß der Oberflächenbereich des Möbelteiles — besonders im Hinblick auf mehrfaches beabsichtigtes Lösen des Beschlages — nicht durch die Rippen bzw. Erhebungen verformt wird. Eine Verformung im Oberflächenbereich des Möbelteiles ist deshalb unerwünscht, weil die Oberfläche, etwa bestehend aus Kunststoffbeschichtung, Furnier, Lack od. dgl. durch die Verformung reißen, aufplatzen und abblättern könnte. Dies will mann aus verständlichen Gründen vermeiden.

In diesem Zusammenhang ist es auch wichtig, die Rippen bzw. Erhebungen auf der Umfangsfläche des Drehriegels vorstehen zu lassen, d.h. erhaben anzuordnen, so daß sich die Rippen bzw. Erhebungen in den Werkstoff des Möbelteiles einarbeiten können. Allerdings kann es bei Möbelwerkstoffen, bei denen sich Abrieb bilden kann, zweckmäßig sein, auch eine vertiefte, d.h., in die Umfangsfläche des Drehriegels eindringende Höhlung bzw. Vertiefung vorzusehen, in der sich evtl. durch mehrfaches Lösen und Anziehen entstandener Abrieb, z.B. von der Spanplatte, sammeln und ablagern kann.

In den beigefügten Zeichnungen ist ein bevorzugtes Ausführungsbeispiel der Erfindung dargestellt, welches im folgenden näher beschrieben wird.

Es zeigen
Fig. 1 eine Vorderansicht eines Drehriegels,
Fig. 2 eine Seitenansicht eines Drehriegels,
Fig. 3 ein Schnitt entlang der Linie III—III der Fig. 2, jedoch um 90° im Uhrzeigersinn verdreht,
Fig. 4 eine Rückansicht eines Drehriegels,
Fig. 5 einen Teilschnitt entlang der Linie V-V der Fig. 4 im Zusammenwirken mit einem als Kopfschraube ausgebildeten Verriegelungsteil,
Fig. 6 die in Fig. 4 mit VI bezeichnete vergrößerte Einzelheit.

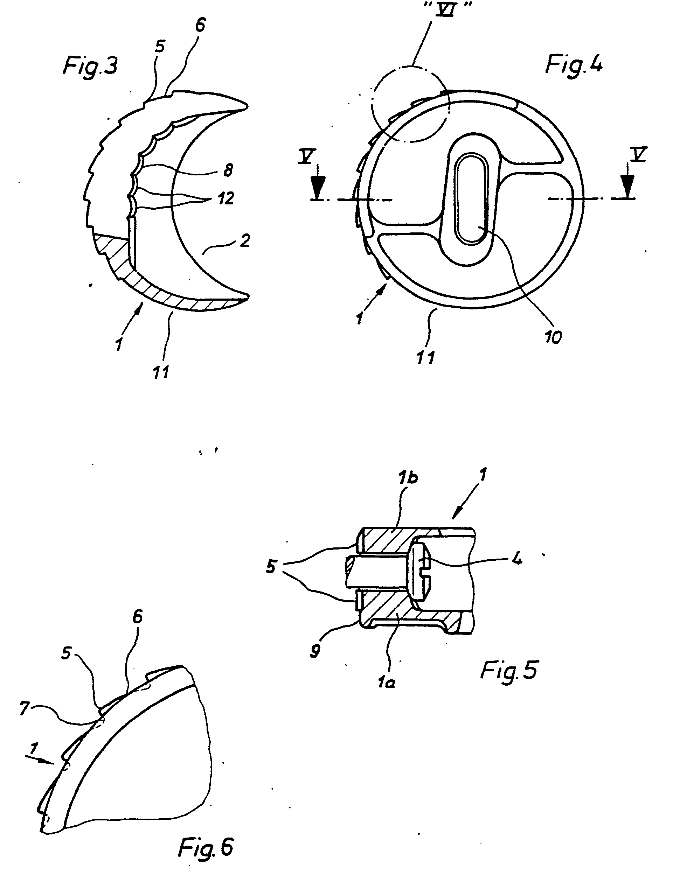

Der in den Figuren gezeigte und nachstehend beschriebene Drehriegel 1 ist an sich bekannt. Durch eine stirnseitige Ausnehmung 2 und einen umfangsseitigen Schlitz 3 ist ein als Kopfschraube 4 ausgebildeter Verriegelungskopf einführbar und wird vom Drehriegel 1 in der Verriegelungsstellung in bekannter Weise von den Hälften la, lb umgriffen (Fig. 5).

Im Mittelbereich besitzt der Drehriegel 1 eine Öffnung 10 zum Ansetzen eines Werkzeuges.

An seiner Umfangsfläche 11 trägt der Drehriegel 1 vorzugsweise eine Sägeverzahnung 5 mit radial bzw. konkav gewölbter Flanke 6. Die Sägeverzahnung 5 ist so gerichtet, daß sie der Verriegelungsdrehrichtung des Drehriegels 1 entgegengesetzt gerichtet ist, d.h. sie setzt beim Lösen des Drehriegels 1 den größeren Widerstand entgegen. Die Sägeverzahnung 5 ist auf der Umfangsfläche 11 des Drehriegels 1 erhaben, d.h. vorstehend aufgebracht. Allerdings kann es zweckmäßig sein, am Fuß der Zähne 5 eine Höhlung bzw. Vertiefung 7 vorzusehen, in der sich evtl. Entstehender Abrieb sammeln und ablagern kann (Fig. 6).

Die Sägezähne 5 sind der Innenspannkurve 8 gegenüberliegend angeordnet (Fig. 3). Die Sägezähne 5 erstrecken sich nicht über die gesamte Höhe des Drehriegels 1, sondern lassen einen umlaufenden Rand 9 frei. Der Rand 9 liegt im Bereich der Oberfläche des nicht dargestellten Möbelteiles und hält den Oberflächenbereich von Verformungen frei.

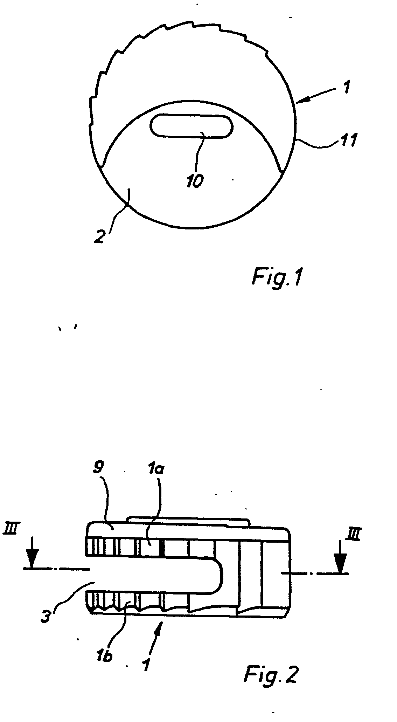

Wie Fig. 2 zeigt, liegt die Verzahnung 5 auf der Umfangsfläche 11 der Drehriegelhälften la, lb einander gegenüber.

Es ist auch denkbar, daß die Verzahnungen 5 mit Versatz so angeordnet werden, daß sie nicht einander gegenüberliegen.

Die Innenspannkurve 8 ist vorzugsweise mit wellenähnlichen radienförmigen Erhebungen 12 versehen. Die Innenspannkurve 8 kann in bekannter Weise unterschiedliche Steigung besitzen, z.B. geringe Steigung im Anfangsbereich, stärkere Steigung im Endbereich oder umgekehrt.

Die Erhebungen 12 können in bekannter Weise in ihrer Neigung dem Schraubenkopf 4 angepaßt sein (Fig. 5).

Beim Spannen, d.h. beim Verdrehen des Drehriegels 1 bezogen auf Fig. 3 im Uhrzeigersinn, gleitet der Schraubenkopf 4 über die wellenförmigen Erhebungen 12 und kommt in der Endlage in einer Vertiefung zur Ruhe.

Wie erwähnt, ist die Sägeverzahnung 5 (Fig. 3) so angeordnet, daß sie bei dieser Drehung im Uhrzeigersinn keinen Widerstand entgegensetzt, sondern erst beim Lösen, d.h. bezogen auf Fig. 3, erst beim Drehen im Gegenuhrzeigersinn.

Wie eingangs ausgeführt, gibt es für die Ausbildung der Verzahnungen auf der Umfangsfläche 11 und der Innenspannkurve 8 — etwa in Anpassung an bestimmte Forderungenzahlreiche vom vorstehend beschriebenen Ausführungsbeispiel abweichende Gestaltungsmöglichkeiten.

**Patentansprüche**

1. Beschlag zum Verbinden zweier Möbelteile, bestehend aus einem am ersten Möbelteil festlegbaren Spannteil mit einem Verriegelungskopf sowie einem in eine zylindrische Ausnehmung des zweiten Möbelteiles einsetzbaren Drehriegel mit im wesentlichen zylindrischer Grundform und wenigstens einer etwa spiralförmig verlaufenden Innenspannkurve, die den Verriegelungskopf hintergreift, wobei der Drehriegel zum Zwecke der Verdrehsicherung mit zahnartigen Vorsprüngen versehen ist, dadurch gekennzeichnet, daß sowohl die Innenspannkurve (8) verzahnungsähnliche Erhöhungen bzw. Vertiefungen (12) aufweist wie auch die Umfangsfläche (11) des Drehriegels (1) wenigstens teilweise mit Rippen bzw. Erhöhungen (5) versehen ist, daß die Rippen bzw. Erhöhungen (5) über die Umfangsfläche (11) des Drehriegelkörpers (1) hinausragen, d.h., erhaben sind und die Gestalt einer Sägeverzahnung (6) aufweisen und daß die Erhöhungen der Innenspannkurve (8) aneinander gereihte, annähernd radienförmige Wellenberge (12) bzw. die Vertiefungen der Innenspannkurve (8) aneinander gereihte, annähernd radienförmige Wellentäler sind.

2. Beschlag nach Anspruch 1, dadurch gekennzeichnet, daß die Rippen bzw. Erhöhungen (5) parallel zur Drehriegelachse verlaufen.

3. Beschlag nach Anspruch 1 oder 2, dadurch gekennzeichnet, daß die Rippen bzw. Erhöhungen (5) nur auf einem Teil der Umfangsfläche (11) des Drehriegels (1) angeordnet sind und von einem rippenfreien, umlaufenden Rand (9) begrenzt sind.

4. Beschlag nach Anspruch 3, dadurch gekennzeichnet, daß der Rand (9) zur im eingebauten Zustand des Drehriegels (1) sichtbaren Seite gerichtet ist.

5. Beschlag nach einem oder mehreren der Ansprüche 1 bis 4, dadurch gekennzeichnet, daß die Sägeverzahnung (6) der Verriegelungsdrehrichtung des Drehriegels (1) entgegengesetzt gerichtet ist.

6. Beschlag nach einem oder mehreren der Ansprüche 1 bis 5, dadurch gekennzeichnet, daß die Rippen bzw. Erhöhungen (5) einzelne, ggfs. geneigte warzenähnliche Erhebungen sind.

7. Beschlag nach einem oder mehreren der Ansprüche 1 bis 6, dadurch gekennzeichnet, daß die Rippen bzw. Erhöhungen (5) beidseitig eines umfangseitigen Schlitzes (3) des Drehriegels (1) einander gegenüberliegend angeordnet sind.

8. Beschlag nach Anspruch 7, dadurch gekennzeichnet, daß die Rippen bzw. Erhöhungen (5) beidseitig des Schlitzes (3) zueinander versetzt gegenüberliegend angeordnet sind.

9. Beschlag nach einem oder mehreren der Ansprüche 1 bis 8, dadurch gekennzeichnet, daß die Rippen bzw. Erhöhungen (5) in Gestalt einer Schrägverzahnung angeordnet sind.

10. Beschlag nach einem oder mehreren der Ansprüche 1 bis 8, dadurch gekennzeichnet, daß die Rippen bzw. Erhöhungen (5) in Gestalt einer Pfeilverzahnung angeordnet sind.

11. Beschlag nach einem oder mehreren der Ansprüche 1 bis 10, dadurch gekennzeichnet, daß die Zahnflanken (6) konkav gewölbt sind.

12. Beschlag nach einem oder mehreren der Ansprüche 1 bis 10, dadurch gekennzeichnet, daß die Zahnflanken (6) konvex gewölbt sind.

13. Beschlag nach einem oder mehreren der Ansprüche 1 bis 10, dadurch gekennzeichnet, daß jede Zahnflanke (6) eine Gerade ist, die am Fuß in einem Radius ausläuft.

14. Beschlag nach einem oder mehreren der Ansprüche 1 bis 13, dadurch gekennzeichnet, daß die Zähne durch radiusförmige Ausnehmungen entstehen.

15. Beschlag nach einem oder mehreren der Ansprüche 1 bis 14, dadurch gekennzeichnet, daß am Zahnfuß eine in die Umfangsfläche (11) des Drehriegels (1) eindringende Höhlung/Vertiefung (7) vorgesehen ist.

16. Beschlag nach einem oder mehreren der Ansprüche 1 bis 15, dadurch gekennzeichnet, daß sich die Höhe der Rippen bzw. Erhebungen (5) zum Mittelteil des Drehriegels (1) hin vergrößert.

17. Beschlag nach einem oder mehreren der Ansprüche 1 bis 16, dadurch gekennzeichnet, daß die Höhe der Rippen bzw. Erhöhungen (5,12) im Anfangsbereich geringer ist als im Endbereich der Verzahnung.

18. Beschlag nach einem oder mehreren der Ansprüche 1 bis 17, dadurch gekennzeichnet, daß die Erhöhungen der Innenspannkurve (8) Spitzen mit konvexen Flanken sind.

19. Beschlag nach einem oder mehreren der Ansprüche 1 bis 17, dadurch gekennzeichnet, daß die Erhöhungen der Innenspannkurve (8) Spitzen mit konkaven Flanken sind.

**Revendications**

1. Ferrure pour assembler deux parties de meuble, constituée d'une partie de serrage, munie d'une tête de verrouillage, qui peut être fixée sur la première partie de meuble, ainsi que d'un verrou rotatif qui peut être inséré dans un évidement cylindrique de la deuxième partie de meuble, verrou qui présente une forme de base sensiblement cylindrique et au moins une came de serrage intérieure s'étendant approximativement en spirale qui s'engage derrière la tête de verrouillage, le verrou rotatif étant muni de sailles semblables à des dents pour assurer le blocage en rotation, caractérisée en ce que la came de serrage intérieure (8) présente des bossages ou selon le cas des renfoncements (12), à la manière de dentures, tandis que la face périphérique (11) du verrou rotatif (1) est pourvue au moins partiellement de nervures ou de bossages (5), en ce que les nervures ou bossages (5) dépassent de la face périphérique (11) du corps du verrou rotatif (1), c'est-à-dire sont en relief, et présentent la forme d'une denture de scie (6), et en ce que les bossages de la came de serrage intérieure (8) sont des crêtes d'ondes alignées (12) approximativement en forme de rayons, ou selon le cas les renfoncements de la came de serrage intérieure (8) sont des creux d'ondes alignés approximativement en forme de rayons.

2. Ferrure selon la revendication 1, caractérisée en ce que les nervures ou bossages (5) s'étendent parallèlement à l'axe du verrou rotatif.

3. Ferrure selon la revendication 1 ou 2, caractérisée en ce que les nervures ou bossages (5) ne sont disposés que sur une partie de la face périphérique (11) du verrou rotatif (1), et sont délimités par un bord circulaire (9) exempt de nervures.

4. Ferrure selon la revendication 3, caractérisée en ce que le bord (9) est orienté vers le côté qui est visible à l'état monté du verrou rotatif (1).

5. Ferrure selon une ou plusieurs des revendications 1 à 4, caractérisée en ce que la denture de scie (6) est orientée à l'opposé du sens de rotation de verrouillage du verrou rotatif (1).

6. Ferrure selon une ou plusieurs des revendications 1 à 5, caractérisée en ce que les nervures ou bossages (5) sont des rehaussements individuels, éventuellement inclinés, semblables à des boutons.

7. Ferrure selon une ou plusieurs des revendications 1 à 6, caractérisée en ce que les nervures ou bossages (5) sont disposés en vis-à-vis de part et d'autre d'une fente périphérique (3) du verrou rotatif (1).

8. Ferrure selon la revendication 7, caractérisée en ce que les nervures ou bossages (5) sont disposés de part et d'autre de la fente (3) en étant décalés les uns par rapport aux autres.

9. Ferrure selon une ou plusieurs des revendications 1 à 8, caractérisée en ce que les nervures ou bossages (5) sont disposés en forme de denture hélicoïdale.

10. Ferrure selon une ou plusieurs des revendications 1 à 8, caractérisée en ce que les nervures ou bossages (5) sont disposés en forme de denture chevronnée.

11. Ferrure selon une ou plusieurs des revendications 1 à 10, caractérisée en ce que les flancs de dents (6) présentent une courbure concave.

12. Ferrure selon une ou plusieurs des revendications 1 à 10, caractérisée en ce que les flancs de dents (6) présentent une courbure convexe.

13. Ferrure selon une ou plusieurs des revendications 1 à 10, caractérisée en ce que chaque flanc de dent (6) est une droite qui, au pied de la dent, se termine par un rayon.

14. Ferrure selon une ou plusieurs des revendications 1 à 13, caractérisée en ce que les dents sont formées par des évidements en forme de rayons.

15. Ferrure selon une ou plusieurs des revendications 1 à 14, caractérisée en ce qu'il est prévu en pied de dent une cavité/renfoncement (7) qui pénètre dans la face périphérique (11) du verrou rotatif (1).

16. Ferrure selon une ou plusieurs des revendications 1 à 15, caractérisée en ce que la hauteur des nervures ou bossages (5) augmente en direction de la partie médiane du verrou rotatif (1).

17. Ferrure selon une ou plusieurs des revendications 1 à 16, caractérisée en ce que la hauteur des nervures ou bossages (5, 12) est plus petite dans la région initiale que dans la région terminale de la denture.

18. Ferrure selon une ou plusieurs des revendications 1 à 17, caractérisée en ce que les bossages de la came de serrage intérieure (8) sont des pointes à flancs convexes.

19. Ferrure selon une ou plusieurs des revendications 1 à 17, caractérisée en ce que les bossages de la came de serrage intérieure (8) sont des pointes à flancs concaves.

**Claims**

1. A fitment for connecting two portions of an article of furniture, comprising a clamping member which can be secured to the first portion of the article of furniture, with a locking head, and a rotary lock which can be fitted into a cylindrical recess in the second portion of the article of furniture, of substantially cylindrical basic shape and having a substantially spirally extending internal clamping cam which engages behind the locking head, wherein the rotary lock is provided with tooth-like projections for the purposes of preventing it from rotating, characterised in that both the internal clamping cam (8) has tooth-like raised portions or depressions (12) and also the peripheral surface (11) of the rotary lock (1) is at least partially provided with ribs or raised portions (5), that the ribs or raised portions (5) project beyond the peripheral surface (11) of the rotary lock body (1), that is to say they are raised, and are of the configuration of a sawtooth arrangement (6), and that the raised portions of the internal clamping cam (8) are approximately radius-shaped wave crests (12) which are arranged in a row with each other or the depressions of the internal clamping cam (8) are approximately radius-shaped wave troughs which are arranged in a row with each other.

2. A fitment according to claim 1 characterised in that the ribs or raised portions (5) extend parallel to the axis of the rotary lock.

3. A fitment according to claim 1 or claim 2 characterised in that the ribs or raised portions (5) are arranged only on a part of the peripheral surface (11) of the rotary lock (1) and are delimited by a rib-free, peripherally extending edge (9).

4. A fitment according to claim 3 characterised in that the edge (9) is directed towards the side which is visible in the installed condition of the rotary lock (1).

5. A fitment according to one or more of claims 1 to 4 characterised in that the sawtooth configuration (6) is directed in opposite relationship to the direction of rotary locking movement of the rotary lock (1).

6. A fitment according to one or more of claims 1 to 5 characterised in that the ribs or raised portions (5) are individual, possibly inclined, nipple-like elevated portions.

7. A fitment according to one or more of claims 1 to 6 characterised in that the ribs or raised portions (5) are arranged in mutually opposite relationship on both sides of a slot (3) at the periphery of the rotary lock (1).

8. A fitment according to claim 7 characterised in that the ribs or raised portions (5) are arranged on both sides of the slot (3) in mutually displaced opposite relationship to each other.

9. A fitment according to one or more of claims 1 to 8 characterised in that the ribs or raised portions (5) are arranged in the configuration of a spiral tooth arrangement.

10. A fitment according to one or more of claims 1 to 8 characterised in that the ribs or raised portions (5) are arranged in the configuration of a herringbone tooth arrangement.

11. A fitment according to one or more of claims 1 to 10 characterised in that the tooth flanks (6) are concavely curved.

12. A fitment according to one or more of claims 1 to 10 characterised in that the tooth flanks (6) are convexly curved.

13. A fitment according to one or more of claims 1 to 10 characterised in that each tooth flank (6) is a straight line which terminates in a radius at the base.

14. A fitment according to one or more of claims 1 to 13 characterised in that the teeth are provided by radius-shaped recesses.

15. A fitment according to one or more of claims 1 to 14 characterised in that provided at the base of the tooth is a recess/depression (7) which penetrates into the peripheral surface (11) of the rotary lock (1).

16. A fitment according to one or more of claims 1 to 15 characterised in that the height of the ribs or raised portions (5) increases towards the central part of the rotary lock (1).

17. A fitment according to one or more of claims 1 to 16 characterised in that the height of the ribs or raised portions (5, 12) is less in the initial region than in the terminating region of the tooth arrangement.

18. A fitment according to one or more of claims 1 to 17 characterised in that the raised portions of the internal clamping cam (8) are tips with convex flanks.

19. A fitment according to · one or more of claims 1 to 17 characterised in that the raised portions of the internal clamping cam (8) are tips with concave flanks.

*Fig.1*

*Fig.2*

Fig.3

Fig.4

Fig.5

Fig.6